# EUROPEAN PATENT SPECIFICATION

(11) **EP 2 660 819 B1**
(45) Date of publication and mention of the grant of the patent: **23.11.2016**
(21) Application number: 13165868.4
(22) Date of filing: 29.04.2013
(51) Int. Cl.: G11B 27/034, G11B 27/10, G11B 27/34, H04N 21/00

(54) **Method to play video in reverse and related entertainment device and computer program**
Verfahren zum Rückwärts-Abspielen von Videos sowie zugehörige Entertainmentvorrichtung und Computerprogramm
Procédé de lecture de vidéo en marche arrière et dispositif de reproduction associé et logiciel informatique

(30) Priority: 01.05.2012 US 201213461564
(43) Date of publication of application: 06.11.2013
(73) Proprietor: Eldon Technology Limited trading as Echostar Europe, Keighley, Yorkshire BD20 6QW (GB)
(72) Inventor: Thornberry, Kevin, Leeds, LS28 7QH (GB)
(74) Representative: Beck Greener

(56) References cited:
- US-A1- 2004 252 970
- US-A1- 2004 264 924
- US-A1- 2006 263 067
- US-B1- 6 473 558

## Description

The present invention relates to a method to play video in reverse and a related entertainment device and computer program.

Entertainment systems are used to present audio and video information to users. For example, satellite and cable television systems present programming content to users through presentation systems such as televisions and stereos. The programming content may include sporting events, news events, television shows, or any other information. The programming content generally includes audio information, video information, and control information which coordinates the presentation of the audio and video data.

In many cases, the programming content is encoded according to an accepted multimedia encoding standard. For example, the programming content may conform to an ITU-T H.264 standard, an ISO/IEC MPEG-4 standard, or some other standard.

In many cases, the accepted multimedia encoding standard will encode the video data as a sequence of constituent frames. The constituent frames are used independently or in combination to generate presentable video frames which can be sent in sequence to a presentation device such as a display. The video data may, for example, be encoded as a video data stream of I-frames, P-frames, and B-frames according to a multimedia standard protocol.

US2004252970 discloses an apparatus for controlling a digital video (MPEG) player for reverse-play. The MPEG player is comprised of an I-frame buffer for storing I-pictures encoded from P-pictures by a video decoder, a B-frame buffer for storing B-pictures, and an I-frame encoder for decoding a P-picture into an I-picture. In the MPEG player, a picture group being played at present is decoded for reverse play and a previous picture group is decoded for preparation of the reverse-play.

An I-frame, or intra-frame, is a frame of video data encoded without reference to any other frame. A video data stream will begin with an I-frame. Subsequent I-frames will be included in the video data stream at regular intervals. I-frames typically provide identifiable points for specific access into the video data stream. For example, when a user is seeking to find a particular point in a multimedia file, a decoder may access and decode I-frames in a video data stream in either a fast-forward or reverse playback mode. An advantage of I-frames is that they include enough information to generate a complete frame of presentable data that can be sent to a display device. A disadvantage of I-frames is that they are relatively large compared to other frames.

A P-frame, or predictive inter-frame, is encoded with reference to a previous I-frame or a previous P-frame. Generally speaking, a P-frame does not include enough information to generate static elements of a presentable frame that have not changed from previous frames. Instead, the P-frame merely references a particular previous frame and uses the video information that is found in the previous frame. Stated differently, the areas of a presentable frame that have not changed are propagated from a previous frame, and only the areas of a presentable frame that have changed (*i.e.,* the areas that are in motion) are updated in the current frame. Thus, only the areas of the presentable frame that are in motion are encoded in the P-frame. Accordingly, P-frames are generally much smaller in size than I-frames.

A B-frame, or bi-directionally predictive inter-frame, is encoded with reference to one or more preceding reference frames as well as one or more future reference frames. B-frames improve the quality of multimedia content by smoothly tying video frames of moving video data together. A B-frame is typically very small in size relative to I-frames and P-frames. On the other hand, a B-frame typically requires more memory, time, and processing capability to decode.

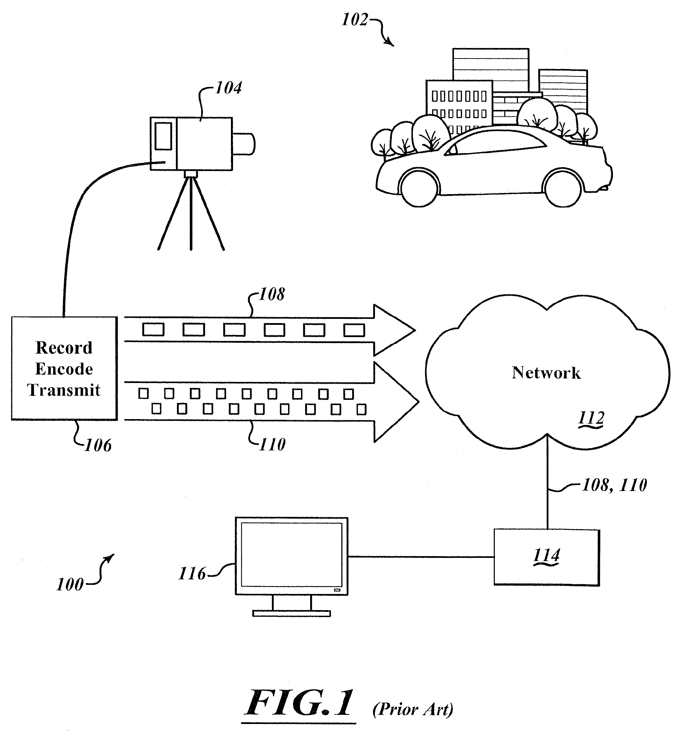

Figure 1 illustrates a conventional encode/decode operation 100. A scene 102 is recorded using a camera 104 with video recording capability. This scene 102 is recorded, encoded, and transmitted by a device 106 arranged for such purpose. The recording, encoding, transmitting device 106 is arranged to encode the video data according to an accepted encoding standard. For example, the video data may be encoded as a standard definition (SD) lower resolution video stream 108 (e.g., MPEG-2). Alternatively, the video data may be encoded as a high definition (HD) higher resolution video stream 110 (*e.g.,* MPEG-4, H.264, or the like).

The encoded video data 108, 110 is transmitted via a wired or wireless network 112. An entertainment device 114 is configured to receive the encoded video data. The entertainment device 114 is further configured to decode the encoded video data 108, 110 into a sequence of presentable video frames that are subsequently passed to a presentation device 116.

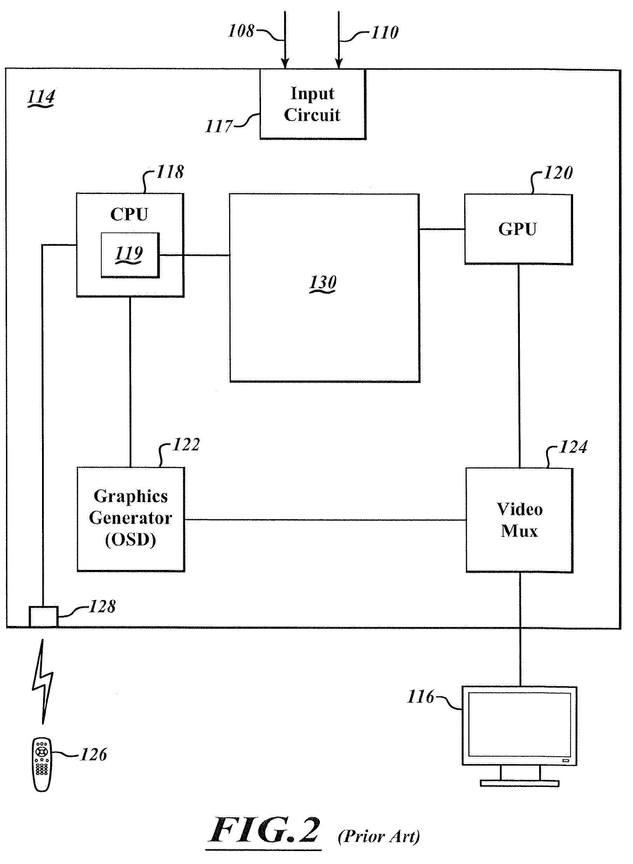

Figure 2 illustrates a conventional entertainment device 114 in more detail. For the sake of simplicity, those of skill in the art will recognize that the entertainment device 114 is illustrated with many circuits not shown. The circuits that are not shown are well understood by those of skill in the art.

The entertainment device 114 includes an input circuit 117 to receive a stream of video data 108, 110. The input circuit 117 is configured as a front-end circuit (e.g., as found on a set top box) to receive the video data stream 108, 110. The input circuit 117 may receive many other types of data in addition to video data, and the data may arrive in any one of the many formats. For example, the data may include over the air broadcast television (TV) programming content, satellite or cable TV programming content, digitally streamed multimedia content from outside the entertainment device, digitally streamed multimedia content from a storage medium located inside the entertainment device 114 or coupled to it, and the like.

The entertainment device 114 of Figure 2 includes a central processing unit (CPU) 118 configured to control operations of the entertainment device 114. The CPU 118 may include firmware and/or hardware means, including, but not limited to, one or more microprocessors, digital signal processors (DSPs), application specific integrated circuits (ASICs), standard integrated circuits, controllers (e.g., by executing appropriate instructions, and including microcontrollers and/or embedded controllers), field-programmable gate arrays (FPGAs), complex programmable logic devices (CPLDs), and the like cooperatively coupled to carry out the functions of the entertainment device.

The CPU 118 is configured to operate a video decoder module 119. The video decoder module 119 may be separate and distinct from the CPU 118, or the video decoder module 119 may be integrated with the CPU 118. Alternatively, the video decoder module may be integrated with the functionality of a GPU 120. Generally speaking, the video decoder module 119 may include hardware and software to parse a video data stream into constituent frames and decode constituent frames to produce presentable video frames.

The entertainment device 114 includes a graphics processing unit (GPU) 120. The GPU 120 typically includes a processing unit, memory, and hardware circuitry particularly suited for presenting image frames to a presentation device. The GPU 120 performs certain video processing tasks independently and other tasks under control of the CPU 118. In some cases the GPU 120 is a separate processing device coupled to the CPU 118, and in other cases the GPU 120 is formed as part of the functionality of CPU 118.

A graphics generator, or on-screen display (OSD) 122 is a module configured to superimpose graphic images on a presentation device 116. The OSD 122 is typically used to display information such as volume, channel, and time. The information generated by the OSD 122 is generally prepared as an overlay to video data generated by the GPU 120. A video multiplexor 124 selects the video information that is passed to the presentation device 116. In some cases, the video multiplexor 124 selects information from either the GPU 120 or the OSD 122. In other cases, the video multiplexor 124 selects information from both the GPU 120 and the OSD 122, and in such cases the information from the OSD 122 is typically superimposed on the information from the GPU 120.

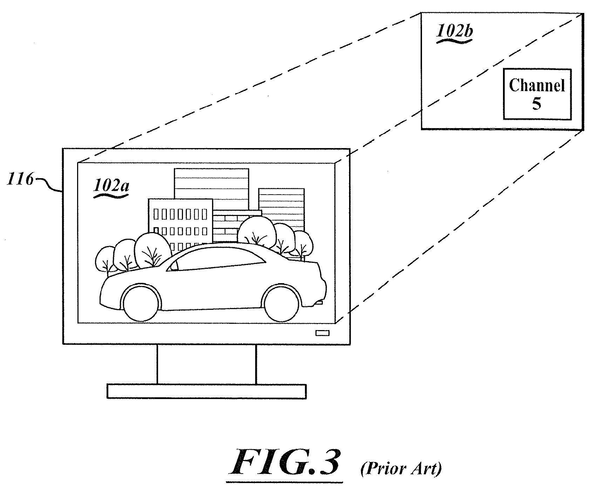

Figure 3 illustrates a representation of images output by a GPU 120 and an OSD 122. The original scene 102 from Figure 1 is illustrated as scene 102a on a presentation device 116. The scene 102a has been generated by GPU 120 and passed through the video multiplexor 124. Concurrently, graphic 102b has been generated by OSD 122. The graphic 102b is passed by the video multiplexor 124 and superimposed as an overlay on scene 102a and displayed on the presentation device 116.

Referring back to Figure 2, a user input control 126 is configured to provide input to the entertainment device 114 through a user input control circuit 128. The user input control 126 may be a conventional remote control device or some other wired or wireless input device. Accordingly, a user may direct the entertainment device 114 to play real-time multimedia content from one or many channels. The user may further direct the entertainment device 114 to record multimedia content, fast-forward and reverse play the content, and otherwise control the storage and delivery of multimedia content.

The entertainment device 114 of Figure 2 includes a memory 130. The memory 130 may be cooperatively used by one or more of the CPU 118, the GPU 120, and the graphics generator OSD 122. In particular, the memory 130 may include systems, modules, or data structures stored (e.g., as software instructions or structured data) on a transitory or non-transitory computer-readable storage medium such as a hard disk, flash drive, or other non-volatile storage device, volatile or non-volatile memory, a network storage device, or a portable media article (e.g., a DVD disk, a CD disk, an optical disk, a flash memory device, etc.) to be read by an appropriate input or output system or via an appropriate connection.

A conventional entertainment device 114, such as the one illustrated in Figures 1 and 2, is configured to decode a stream of video data and generate a sequence of presentable frames. A user can direct the entertainment device 114 to playback the generated sequence on a presentation device 116 such as a display. The user can direct the playback to occur at a normal speed when they wish, for example, to view a TV show or a recorded video. The user can fast forward or rewind the playback to find a particular spot in the playback or for other reasons.

It has been noticed by some users that certain video data streams can be played back smoothly in reverse by the entertainment device 114 and other video data streams, when they are played in reverse, are not played smoothly at all. Instead, when those other video data streams are played in reverse, the user sees a very choppy playback and has an overall poor user experience. Upon further study, it has been found that the video data streams that play in reverse smoothly are encoded with a simpler protocol than the video data streams that are encoded with a more complex protocol.

High definition (HD) video data streams, such as MPEG-4, require a substantially more complex decoder than lower resolution video data streams (e.g., MPEG-2). In the circuitry of a complex decoder, there is typically not enough SRAM, frame buffer, and other fast memory to smoothly play the higher definition video in reverse. For example, a higher definition encoding protocol may require 32 (or even more) frames resident in memory in order to construct the 33rd frame.

The higher definition video data encoding protocol provides increased efficiency when playing data in the forward direction. Accordingly, when playing data in the forward direction at normal speed, and even at high speed, a decoder can generate the presentable frames of data at a sufficiently high speed. Particular limitations in memory, computational capability, and the like will determine how quickly a video data stream can be decoded and played in the forward direction, but the highest speed of the decoder has been found to be generally sufficient to provide a satisfactory user experience during forward play.

When a high definition video stream of data is played in reverse, however, it has been found that conventional decoders do not provide a good viewing experience for the user. In conventional configurations, the high-definition (HD) video is too complex to decode in reverse at real-time speeds. Decoding each frame of an HD video stream consumes substantial memory resources to temporarily store at least one intra-frame and many inter-frames and substantial computing resources to analyze and process all relationships between frames. Accordingly, conventional configurations play HD video streams in reverse merely by identifying and decoding progressively previous intra-frames and outputting them.

Since the conventional decoder cannot configure its resources to decode each frame of the video data stream on the fly, in reverse, and at high speed, the user will typically see a very choppy playback of the video data stream. This is contrasted with a lower definition video data stream, which has a more predictable, fixed structure of relationships between standalone intra-frames and reliant inter-frames. Typically, the conventional decoder does have resources configured to decode each frame of the lower definition video data stream on the fly, even in reverse. Since each frame of the lower definition video stream can be decoded in reverse, the user will see a smooth presentation of video frames in reverse.

One common technique now employed by conventional decoders to play higher definition video data streams in reverse is to only generate presentable video frames from I-frames of the video data stream. The problem, however, is that a higher definition video data stream may only have one or two (or fewer) I-frames per second of normal speed video data. In this case, when the higher definition video data stream is played in reverse, the user will see a very choppy video of frames that appear to change only once or twice per second or even less.

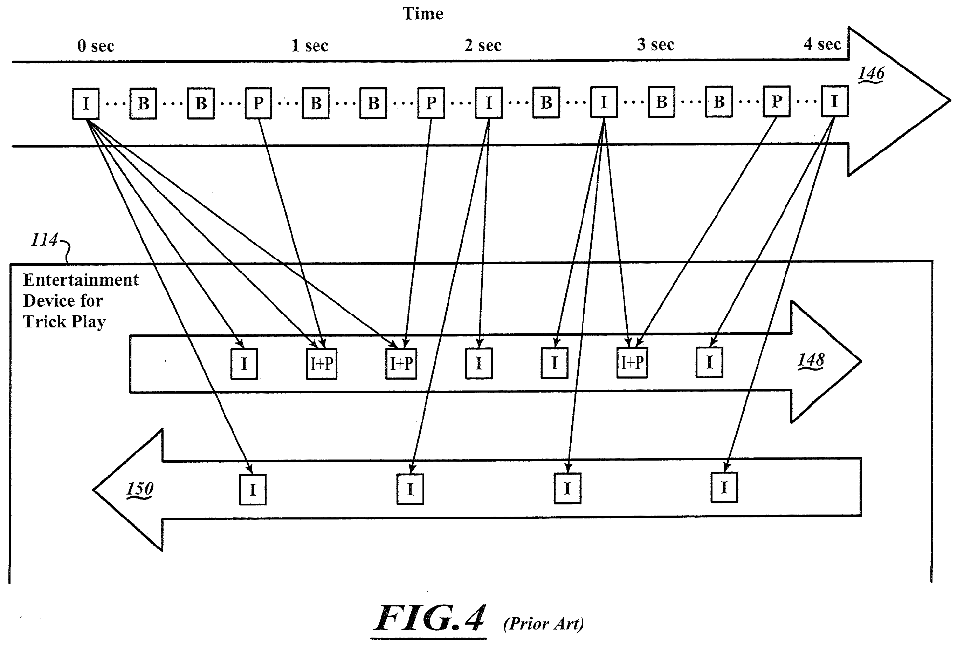

Figure 4 illustrates video processing in a conventional entertainment device 114. The entertainment device parses a high definition video stream (e.g., encoded video stream 110, not shown) into a streaming data flow of video frames 146. The streaming data flow 146 includes I-frames,B-frames, and P-frames. The sequence of frames is illustrated as covering a particular duration of time from 0 seconds to 4 seconds but many other time durations could also have been shown.

The streaming data flow of video frames 146 represents a normal speed, forward playback of the video data. The entertainment device 114 can also be directed by a user for particular trick play. That is, a user can direct the entertainment device 114 to play the video data at a higher speed in the forward direction or in the reverse direction. A fast-forward flow of presentable frames 148 is shown in Figure 4. A reverse-play flow of presentable frames 150 is shown in Figure 4. In addition, some of the relationships between I-frames, B-frames, and P-frames are shown. As illustrated in Figure 4, the fast-forward flow 148 and the reverse-play flow 150 are generating presentable frames for playback at about two times normal speed. That is, about 4 seconds of normal speed video are played back in about 2 seconds. Other playback speeds may be implemented, but the particular speeds are limited as described herein.

When the user directs the entertainment device 114 to play the video in a fast-forward mode, Figure 4 illustrates a stream 148 wherein I-frames are decoded and P-frames are decoded. In other cases, not all of the P-frames are decoded. In still other cases, some or all of the B-frames are also decoded. Generally speaking, the speed at which the video data will be played back in a fast-forward mode will influence which frames and how many frames will be decoded.

When the user directs the entertainment device 114 to play the video in a reverse-play mode, only the I-frames are decoded. When viewed by a user, the reverse play flow of frames 150 will appear very choppy.

The present invention seeks to provide improved video play in reverse.

According to a first aspect of the present invention, there is provided a method to play video in reverse, comprising:
decoding a first plurality of bits of a video data stream into a first sequence of presentable frames ordered for forward play from frame (Y+1) to frame Z, wherein Y and Z are integers, and Z is larger than Y;
storing the first sequence of presentable frames in a first buffer;
decoding a second plurality of bits of the video data stream into a second sequence of presentable frames ordered for forward play from frame (X+1) to frame Y, wherein X is an integer, and Y is larger than X;
storing the second sequence of presentable frames in a second buffer;
retrieving the first sequence of presentable frames from the first buffer;
outputting the first sequence of presentable frames as a reverse playing video stream of frames ordered frame Z to (Y+1);
retrieving the second sequence of presentable frames from the second buffer; and
outputting the second sequence of presentable frames as a reverse playing video stream of frames ordered Y to X+1.

This allows smooth reverse video playback. In embodiments this is achieved on low-cost current generation set-top box hardware, and may achieve smoothly playing video in reverse at a faster than normal speed.

In an embodiment, the method further comprises:
decoding a third plurality of bits of a video data stream into a third sequence of presentable frames ordered for forward play from frame (W+1) to frame X, wherein W is an integer, and X is larger than W;
storing the third sequence of presentable frames in the first buffer;
decoding a fourth plurality of bits of the video data stream into a fourth sequence of presentable frames ordered for forward play from frame (V+1) to frame W, wherein V is an integer, and W is larger than V;
storing the fourth sequence of presentable frames in the second buffer;
retrieving the third sequence of presentable frames from the first buffer;
outputting the third sequence of presentable frames as a reverse playing video stream of frames ordered frame X to (W+1);
retrieving the fourth sequence of presentable frames from the second buffer; and
outputting the fourth sequence of presentable frames as a reverse playing video stream of frames ordered W to V+1.

In an embodiment, outputting the second sequence of presentable frames provides an appearance of seamless reverse playing continued from the outputting the first sequence of presentable frames.

In an embodiment, decoding the third plurality of bits of the video data stream occurs during the outputting the second sequence of presentable frames.

The video data stream may be encoded according to an ITU-T H.264 or ISO/IEC MPEG-4 video protocol.

The first and second sequences of presentable frames may be down-sampled respectively before storing the first and second sequences of presentable frames.

The decoding may be performed by a single decoder.

In an embodiment, the outputting is performed by an on-screen display controller, the on-screen display controller separate and distinct from a graphics controller used to output presentable frames in a forward play.

In an embodiment, the method further comprises: synchronizing decoding operations with outputting operations to provide an apparent seamless reverse playback of presentable frames.

According to a second aspect of the present invention, there is provided an entertainment device, comprising:
an input circuit to receive a stream of video data;
memory arranged as a plurality of buffers;
a video decoder module;
an on-screen display controller;
a processing unit,
the processing unit arranged to direct the video decoder module to decode a first segment of the stream of video data into a first series of presentable frames and store the first series of presentable frames in a first buffer;
the processing unit arranged to direct the video decoder module to decode a second segment of the stream of video data into a second series of presentable frames and store the second series of presentable frames in a second buffer; and
concurrent with the decoding of the second segment, the processing unit arranged to direct the on-screen display controller to output the first series of presentable frames from the first buffer in a reverse direction.

In an embodiment, the processing unit is further arranged to:
direct the video decoder module to decode a third segment of the stream of video data into a third series of presentable frames and store the third series of presentable frames in a third buffer;
concurrent with the decoding of the third segment, the processing unit is further arranged to direct the on-screen display controller to output the second series of presentable frames in the reverse direction.

In an embodiment, the processing unit is further arranged to:
direct the video decoder module to decode a fourth segment of the stream of video data into a fourth series of presentable frames and store the fourth series of presentable frames in a fourth buffer;
concurrent with the decoding of the fourth segment, the processing unit is further arranged to direct the on-screen display controller to output the third series of presentable frames in the reverse direction.

In an embodiment, the first buffer and the third buffer share a first common memory area of the memory, the second buffer and the fourth buffer share a second common memory area of the memory, and the first common memory area and the second common memory area are configurable for use in a ping-pong operation.

In an embodiment, storing each of the first and second series of presentable frames includes down-sampling the decoded frames.

In an embodiment, the video decoder module is the only video decoder module in the entertainment device.

According to a third aspect of the present invention, there is provided a computer program containing program instructions which when executed on a computing system cause the computer system to perform a method, the method comprising:
directing a video output module to output a decoded sequence of video frames to a display device;
storing a decoded and down-sampled first sequence of presentable frames;
storing a decoded and down-sampled second sequence of presentable frames; and
while storing the decoded and down-sampled second sequence of presentable frames, directing an on-screen display module to output the first sequence of presentable frames in reverse order to the display device.

The stored contents may configure the computing system to perform the method, the method further comprising:
storing a decoded and down-sampled third sequence of presentable frames; and
while storing the decoded and down-sampled third sequence of presentable frames, directing the on-screen display module to output the second sequence of presentable frames in reverse order to the display device.

The stored contents may configure the computing system to perform the method, wherein directing the on-screen display module to output the first sequence of presentable frames includes directing the on-screen display module to superimpose the first sequence of presentable frames on top of the decoded sequence of video frames.

The stored contents may configure the computing system to perform the method, wherein the decoded sequence of video frames form a video stream conforming to a high definition (HD) video standard resolution and the decoded and down-sampled first and second sequences of presentable frames respectively form a video stream conforming to a standard definition (SD) video standard resolution or a sub-SD resolution.

The stored contents may configure the computing system to perform the method, wherein each frame is decoded with a same decoder module.

It will be appreciated that any features expressed herein as being provided in one example or embodiment or as being preferable may be provided in combination with any one or more other such features together with any one or more of the aspects of the present invention.

The invention also extends to an entertainment device and to a computer program arranged to carry out any of the methods described above.

In embodiments of the present invention, the HD video stream may be smoothly played in reverse video playback on low-cost, current generation set-top box hardware. Progressively earlier segments (e.g., one second segments of time N, time N-1, time N-2, etc.) of the HD video stream are identified. The operation begins by decoding a first segment in a forward direction and storing the decoded presentable frames in a buffer. After the decode-and-store act of the first segment, subsequent segments are also decoded-and-stored. Concurrently, as a new, earlier segment is decoded-and-stored, the presentable frames of a previously decoded-and-stored segment are retrieved in reverse order and output to an attached display. The operation can proceed by alternating decode-and-store tasks to one buffer with retrieve-and-output tasks from another buffer. The use of the two buffers alternates in a ping-pong technique.

A conventional video decoder is not configured to smoothly play a high definition video data stream in reverse. Due to the complexity of the high definition encoding protocol, the decoder, as conventionally configured, cannot delete interim data and re-decode new data fast enough to play the video stream in reverse. Additionally, the decoder cannot avoid all of the repeated decoding by maintaining the interim data frames because of the amount of memory that would be required for smooth reverse playback. The decoder does not have enough memory to keep all of the interim frames used during the decode process of the high definition video data stream such that the video can be played smoothly in reverse.

Preferred embodiments able to smoothly play high definition video in reverse. The preferred embodiments are robust enough to smoothly play the high definition video stream in reverse at normal speed and at faster than normal speed.

In one embodiment, a user will direct an entertainment device to play a high definition video stream in reverse. Upon the device being directed to play in reverse, a segment of the video data stream will first be decoded in the forward direction to generate a sequence of presentable frames. The decoded presentable frames of the segment, which may be reduced in quality, are stored in sequence. Subsequently, the presentable frames of the sequence will be output to the presentation device in reverse order. During that time when the presentable frames of this sequence are being output in reverse order, the next earlier segment of the video data stream will be decoded in the forward direction. The presentable frames of the next earlier segment, which may also be reduced in quality, are stored in sequence. After the supply of presentable frames from the first segment is exhausted, the presentable frames from the next earlier segment will be output to the presentation device in reverse order. As the second segment of frames is being output, a third even earlier segment of the video data stream will be decoded. The process of decoding each earlier segment of video data during the time that later frames are being output in reverse can continue until the user directs the entertainment device to stop the reverse playback.

Embodiments of the present invention will hereinafter be described, by way of example, with reference to the accompanying drawings, in which:
Figure 1 illustrates a conventional encode decode operation;
Figure 2 illustrates a conventional entertainment device in more detail;
Figure 3 illustrates a representation of images output by a GPU and an OSD;
Figure 4 illustrates video processing in a conventional entertainment device;
Figure 5 illustrates an example of an embodiment of an entertainment device configured to smoothly play a high definition video data stream in reverse;
Figure 6 illustrates a streaming data flow of video frames and processing of an embodiment of the reverse playback module;
Figures 7A-7C show a simplified illustration of ping-pong operation of the entertainment device 214;
Figure 8A illustrates two streams of video data within an embodiment of entertainment device;
Figure 8B illustrates relationships between decode-and-store operations and retrieve-and-output operations of the data streams of Figure 8A; and,
Figure 9 illustrates a conceptual flowchart of the decode-and-store operations performed concurrently with the retrieve-and-output operations.

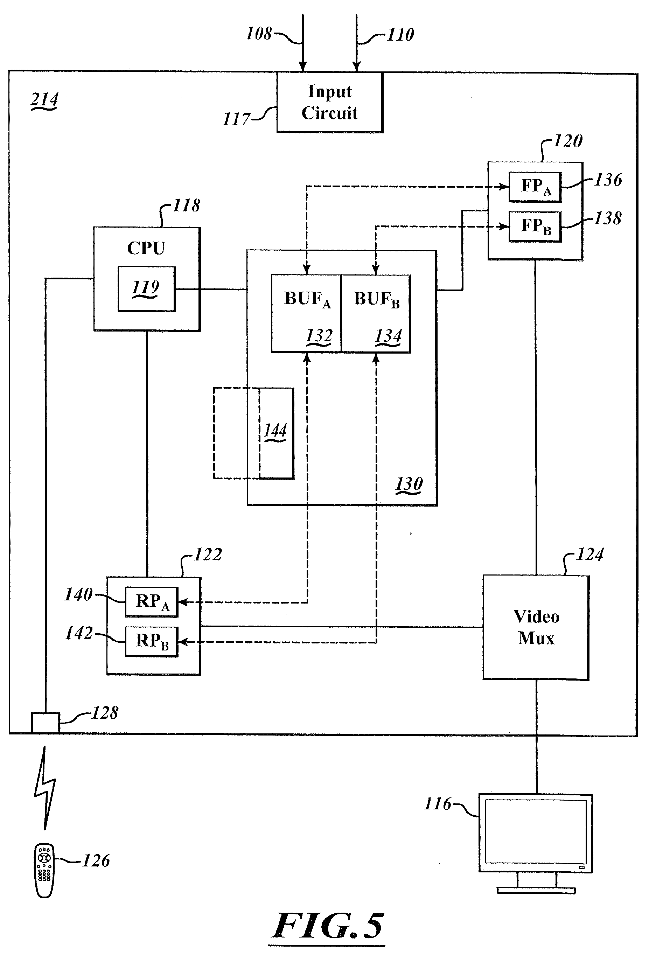

Figure 5 illustrates an entertainment device 214 configured to smoothly play a high definition video data stream in reverse. The entertainment device 214 includes particular circuits that are found in the entertainment device 114 of Figures 1 and 2. The particular circuits of Figure 2 share common reference designations with circuits of Figure 1 where applicable, however, it is recognized that the circuits are configured and operable in a new way. Thus, it is recognized that the hardware of a conventional entertainment device 114 can be reconfigured in some cases as an entertainment device 214 to smoothly play a high definition video data stream in reverse.

The entertainment device 214 includes an input circuit 117 to receive a stream of video data 108, 110. A CPU 118 is configured to control operations of the entertainment device 214 including a video decoder module 119. That is, the CPU 118 and the video decoder module 119 may work cooperatively to decode a plurality of bits of the video data stream into a sequence of presentable frames for display on a presentation device. In Figure 5, the video decoder module 119 is illustrated within CPU 118, however, in other embodiments, the video decoder module 119 may be separate from the CPU 118. For example, the video decoder module 119 may be configured within a GPU 120 or the OSD 122. In some embodiments, the video decoder module 119 is the only video decoder module in the entertainment device 214.

The entertainment device 214 includes a user input control 126 and a user input circuit 128. The entertainment device 214 also includes a video multiplexor 124 which is configured to receive video data from a GPU 120 or an OSD 122. The video multiplexor 124 is coupled to a presentation device 116.

The entertainment device 214 includes memory 130. The memory 130 may be comprised of one or more memory devices. The memory 130 may be internal, external, or some combination of both. The memory 130 may be formed as a non-transitory computer-readable storage medium whose stored contents configure a computing system to perform particular acts of a method.

As will be described further, memory 130 is configured with various buffers and pointers to the buffers. The buffers may be allocated physically or virtually. That is, the buffers may be instantiated at a physical address in a specific memory area, or the buffers may be continually allocated and released as memory from a common pool or in some other scheme. As used herein, it is understood that the buffers described as being formed in memory 130 are not necessarily formed with such specificity. Instead, each use of a specifically named buffer identified herein may be formed in the same or in a different memory location by any known programming techniques.

In Figure 5, the entertainment device 214 is illustrated as having particular modules or blocks that are separate and distinct from each other. The particular modules may be formed as one or more integrated circuits, and the modules may further be formed in whole or in part of other discrete electronic and software components. In some embodiments, the particular modules are separate and distinct, however, in other embodiments, some or all of the modules are formed in and configured on the same integrated circuit. For example, in one embodiment, the video decoder module 119, the CPU 118, the GPU 120, the OSD 122, and the video multiplexor 124 are all formed in whole or in part on the same integrated circuit. In another embodiment, the CPU 118 and the decoder 119 are formed on one integrated circuit, and the GPU 120, the OSD 122, and the video multiplexor 124 are formed on a different integrated circuit. It is recognized that any such combinations can be formed to carry out the functions to smoothly present high definition video in reverse.

The memory 130 of Figure 5 includes a first buffer 132 labeled BUF_{A} and a second buffer 134 labeled BUF_{B}. The GPU 120 includes a first forward pointer 136 labeled FP_{A} and a second forward pointer 138 labeled FP_{B}. The OSD 122 includes a first reverse pointer 140 labeled RP_{A} and a second reverse pointer 142 labeled RP_{B}. The first forward pointer 136 and the first reverse pointer 140 are configured as index pointers into the first buffer 132. The second forward pointer 138 and the second reverse pointer 142 are configured as index pointers into the second buffer 134. Each of the respective pointers may be formed within memory 130 and directed by the respective GPU 120 and OSD 122, or the pointers may be formed within the particular module 120, 122.

A reverse playback module 144 is also formed within the entertainment device 214. The reverse playback module 144 may include particular dedicated hardware circuitry, or the reverse playback module 144 may include only software instructions that are executed by CPU 118. In one embodiment, the reverse playback module has some components that are independent and controlled by CPU 118 and other components that are carried out by the CPU 118.

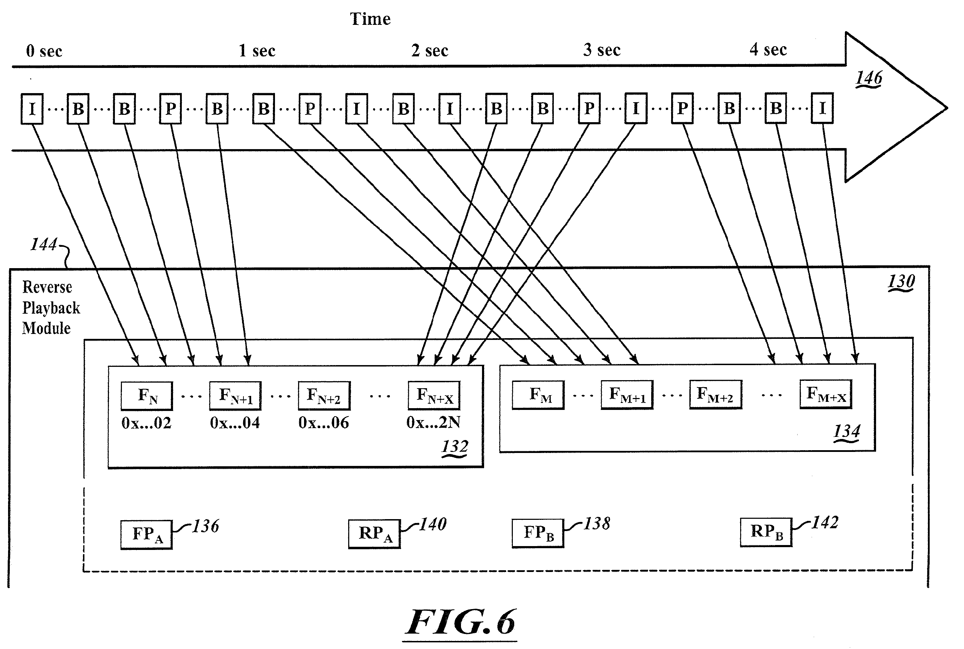

Figure 6 illustrates an example of streaming data flow of video frames 146 and processing of the reverse playback module 144. The streaming data flow of video frames 146 may be produced by a video decoder module 119 (Figure 5) from a high definition encoded video stream 110 received at an input circuit 117 (Figure 5).

A plurality of buffers 132, 134 is configured in the memory 130 of Figure 6. Also configured in the memory are sets of forward pointers FP_{A} 136, FP_{B} 138, and reverse pointers RP_{A} 140, RP_{B} 142.

The processing unit of the reverse playback module 144 directs the video decoder module to decode a first segment of the stream of video data 146 into a first series of presentable frames and store the first series of presentable frames in the first buffer 132. In figure 6, the first segment includes about 1 second of video data. The presentable frames in the buffer 132 are labeled F_{N}, F_{N+1}, F_{N+2}, ... F_{N+X} to indicate that the frames are stored in sequence. The frames may be stored in a forward-play sequence, or alternatively, the frames may be stored in a reverse-play sequence, but the particular storage can take other forms as well.

Subsequently, the processing unit of the reverse playback module 144 directs the video decoder module to decode a second segment of the stream of video data 146 into a second series of presentable frames and store the second series of presentable frames in the second buffer 134. The second segment also includes about 1 second of video data, and the second segment of video data in the data flow 146 occurs right after the first segment of video data. The presentable frames in the buffer 134 are labeled F_{M}, F_{M+1}, F_{M+2}, ... F_{M+X} to indicate that the frames are stored in sequence. Various embodiments may store the frames in a forward-play sequence, a reverse-play sequence, or in some other configuration.

Figure 6 further illustrates two additional segments of data drawn from the stream of video data 146 alternately stored in the buffers 132, 134. A third segment is drawn from the second to third seconds of the video stream 146. A fourth segment is drawn from the third to fourth seconds of the video stream 146. The third segment is decoded into presentable frames, which are stored in the first buffer 132, and the fourth segment is decoded into presentable frames, which are stored in the second buffer 134.

Additional acts are carried out by the processing unit of the reverse playback module 144 to smoothly present the video frames from the buffers in a reverse-play mode. Particularly, concurrent with the decoding of one segment of data drawn from the stream of video data 146, the processing unit is configured to direct an OSD 122 (Figure 5) to output a series of presentable frames from another earlier segment in a reverse direction.

The entertainment device 214 (Figure 5) may be directed by a user to enter a reverse-play mode. The user desires to view some part of a video data stream in reverse. For example, the user may desire to view 4 seconds of the stream of video data 146 in reverse. When the command to enter the reverse mode is received, the processing unit directs the video decoder 119 to decode the segment of data between second 3 and second 4. The stream of video data 146 has been encoded according to a high-definition protocol (e.g., MPEG-4, H.264, or the like). Accordingly, a very efficient decoding process is executed to decode the frames in the forward direction. As the segment of video data is decoded, a forward pointer FP_{B} 138 is used as an index to store the presentable frames in the buffer 134.

After the segment of data between second 3 and second 4 is decoded and stored, the segment of data between second 2 and second 3 is decoded. During the decoding of this second segment, the forward pointer FP_{A} 136 is used as an index to store the presentable frames in the buffer 132. Concurrent with the decoding of this second segment, the OSD 122 is directed by the processing unit to output the presentable frames from buffer 134 to a presentation device 116. The reverse pointer RP_{B} 142 is used as an index into the buffer 134 to retrieve the presentable frames in reverse order.

Subsequently, the decoding of the segment of data between second 2 and second 3 is completed and the presentable frames are stored in buffer 132. Additionally the presentable frames stored in buffer 134 have been output in reverse order to the presentation device 116 and viewed by the user as a sequence of smoothly playing reverse video.

In a ping-pong operation, alternating between buffers 132 and 134, a third segment of data between second 1 and second 2 is decoded and stored in buffer 134. During the decoding operation of the third segment, the reverse-play pointer RP_{A} 140 is used by the OSD 122 to output the presentable frames of buffer 132 in reverse order to the presentation device 116. Then, in a corresponding fashion, the fourth segment of data between second 0 and second 1 is decoded while the presentable frames from the third segment of data between second 1 and second 2 are output in reverse order.

From the description of the decoding and outputting operations, the user will view the stream of video data 146 smoothly presented in reverse. The stream of video data 146 can be very short or alternatively, it can cover a very long stream of video data. The first and second buffers are alternately filled and emptied using the ping-pong technique. Segments of data are decoded in a forward direction and the presentable frames are stored in one buffer. Concurrently, the presentable frames are retrieved in a reverse direction from the other buffer.

Various decoding, storage, and retrieval examples may be implemented. In one example, each segment of data begins with an I-frame. Each frame of each segment is decoded and stored in the buffer. In some embodiments, only some of the decoded frames are stored in the buffers, and in some embodiments the decoded frames are down-sampled before they are stored in the buffers, for example, to a resolution that is below a standard definition (SD) resolution. That is, the decoded frames may have some information removed prior to storage in the buffers. The information that can be removed may include color depth, luminance, resolution, or other information. The down-sampling may reduce the size of the presentable frame such that less memory is used. The down-sampling may reduce the time used to store, retrieve, or display the presentable frame. In some examples, the down-sampling and determination of which frames will be stored permit video to be played smoothly in reverse even more quickly. That is, instead of smoothly playing the presentable frames in reverse at normal speed, the frames may be presented at two times, four times, eight times, sixteen times, the normal forward playback frame rate or by some other multiplier. In some examples the frames are presented at a user-selectable reverse-playback frame rate, and the reverse playback frame rate is limited only by the speed of a forward decoding operation. This is a significant improvement over the prior art.

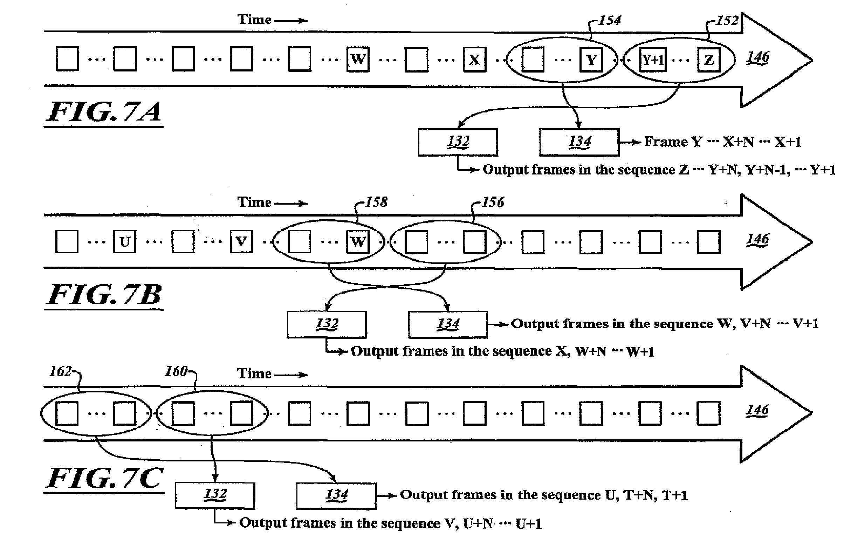

Figures 7A-7C show a simplified illustration of an example of the ping-pong operation of the entertainment device 214. The illustrations of Figures 7A-7C are simplified from that of Figure 6, but the same operations are carried out. That is, one or more index pointers FP_{A}, FP_{B}, RP_{A}, RP_{B} may be used to store and retrieve presentable frames in the buffers 132, 134. The presentable frames may be down-sampled prior to storage in the buffers 132, 134. The data flow 146 of Figures 7A-7C may represent a short sequence of video frame data or a very long sequence of video frame data (e.g., an entire movie or TV program).

Figure 7A illustrates the streaming data flow of video frames 146 having two segments of data 152, 154 called out. With the reference to a forward playback of the streaming data flow of video frames, segment 152 occurs in time just after segment 154. A user has directed the entertainment device 214 to play the data flow in reverse beginning with the last frame of segment 152. This segment of data 152 is decoded in a forward decoding operation, and the presentable frames are stored in the first buffer 132. Upon completion of the decoding of segment 152, a decoding operation of segment 154 commences. During the decoding operation of segment 154, presentable frames are stored in the second buffer 134, and presentable frames are retrieved in reverse playback order from the first buffer 132. The retrieved presentable frames are output to the presentation device 116.

Figure 7B illustrates the streaming data flow of video frames 146 having two segments of data 156, 158. Segment 156 occurs in time just before segment 154, and segment 158 occurs just before segment 156. Segment 156 is decoded and presentable frames are stored in the first buffer 132. Concurrently, the presentable frames from segment 154 are retrieved from the second buffer 134 and output to the presentation device 116. After the decoding of segment 156 and outputting operations of segment 154, segment 158 is decoded and segment 156 is output.

Figure 7C illustrates the streaming data flow of video frames 146 having two segments of data 160, 162. As described with respect to Figures 7A, 7B, segments 160, 162 occur just before segment 158 respectively. The first buffer 132 and second buffer 134 are alternately used to store decoded presentable frames and retrieve presentable frames for output.

As shown in Figures 7A-7C, the respective segments of data 152-162 may each represent about one second of video data. Alternatively each segment may represent more or less than one second of video data. Some segments of video data may represent a different amount of time than other segments. For example, one segment may represent 1100 ms of video data while a different segment represents 900 ms of video data.

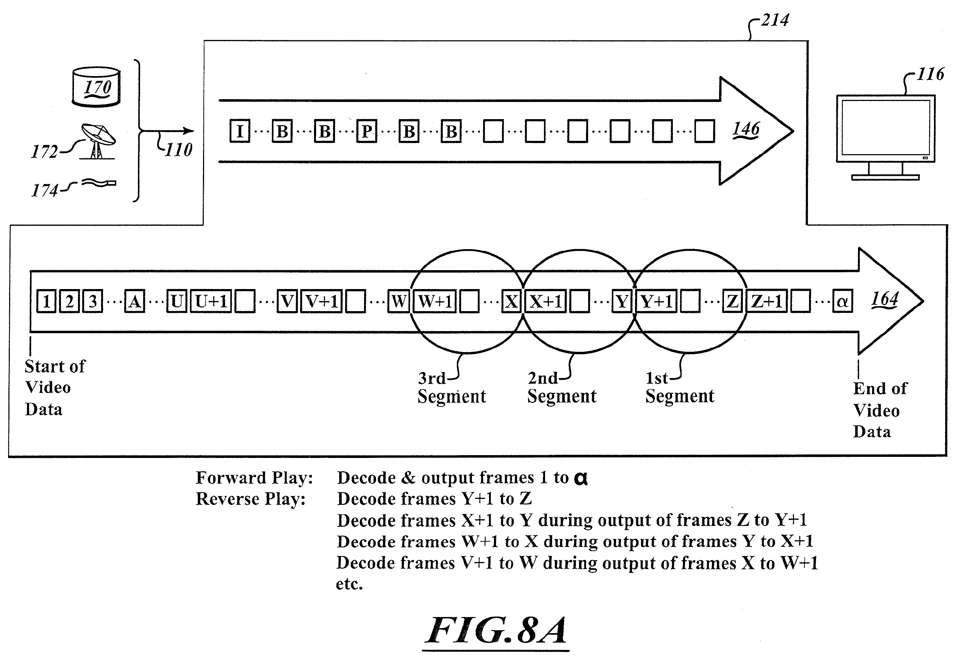

Figure 8A illustrates two streams of video data within entertainment device 214. The first stream is a streaming data flow of video frames 146 encoded according to an accepted standard, which implements a high definition (HD) encoding protocol. The data flow 146 includes I-frames,B-frames, and P-frames. The second data stream is a streaming data flow of presentable frames smoothly presented in reverse order to a presentation device 116 coupled to the entertainment device 214.

A complex device is used to efficiently decode the data flow 146 in a forward play order into presentable frames. In some cases, 8, 16, 32, or more frames are decoded, temporarily stored, and used to decode a subsequent frame. For example, in one case a presentable frame is formed from at least one I-frame and at least 24 inter-frames (*i.e.,* P-frames and B-frames).

In the entertainment device 214, a processing unit is capable of decoding a first plurality of bits of the video data stream 146 into a first sequence of presentable frames ordered for forward play from frame (Y+1) to frame Z. The first sequence of presentable frames is stored in a first buffer. The processing unit is capable of decoding a second plurality of bits of the video data stream 146 into a second sequence of presentable frames ordered for forward play from frame (X+1) to frame Y. The second sequence of presentable frames is stored in the second buffer. Concurrently, the first sequence of presentable frames is retrieved from the first buffer. The first sequence of presentable frames is output as a reverse playing video stream of frames ordered from frame Z to frame (Y+1). Subsequently, the second sequence of presentable frames are retrieved from the second buffer and output as a reverse playing video stream of frames ordered from frame Y to frame (X+1).

Also in the entertainment device 214, the processing unit is capable of decoding a third plurality of bits of the video data stream 146 into a third sequence of presentable frames ordered for forward play from frame (W+1) to frame X. The third sequence of presentable frames is stored in a first buffer. The processing unit is capable of decoding a fourth plurality of bits of the video data stream 146 into a fourth sequence of presentable frames ordered for forward play from frame (V+1) to frame W. The fourth sequence of presentable frames is stored in the second buffer. Concurrently, the third sequence of presentable frames is retrieved from the first buffer. The third sequence of presentable frames is output as a reverse playing video stream of frames ordered from frame X to frame (W+1). Subsequently, the fourth sequence of presentable frames are retrieved from the second buffer and output as a reverse playing video stream of frames ordered from frame W to frame (V+1).

In the example illustrated in Figure 8A and described above, reference letters V to Z are integers, each integer being larger than a previous integer, Z being the largest integer in the group. As each sequence of presentable frames is output from a buffer, the presentable frames provide an appearance of seamless reverse playback. That is, the reverse playback of frames from the alternating buffers is substantially indiscernible to a user watching the frames presented on a display 116.

In the smooth reverse playback operations described with reference to Figures 6 to 8B, a "decode and store" operation occurs on a first buffer while a concurrent "retrieve and output" operation occurs on a second buffer. Alternately operating the buffers in this manner provides a mechanism to smoothly output video in reverse to a presentation device such as a display.

It has been recognized that in one aspect smoothly outputting the video in reverse includes a smooth transition between the operations that are concurrently performed on each buffer. That is, it is desirable to begin a decode-and-store operation with reference to the beginning of a retrieve-and-output operation such that both operations end at about the same time. Preferably, presentable frames are retrieved from each buffer according to a predictable rate. If there is any undesirable latency between the time a final presentable frame is retrieved from one buffer and a first presentable frame is retrieved from the other buffer, the latency is not discernible by a user viewing the reverse-play presentation.

There are many ways to synchronize the decode-and-store operation with the retrieve-and-output operation. In one embodiment, a processing unit will calculate a latency between beginning a decode operation and when a first presentable frame is stored in the buffer. The processing unit can then use the latency as a basis for outputting a reverse-playing series of presentable frames. In another embodiment, the latency is predicted and used to delay the start of a decode operation so that the decode operation will predictably end when the presentable frames are scheduled to be output.

These synchronization operations and latency calculations or predictions may be performed on each alternate buffer operation. Alternatively, the latency calculations or predictions may be performed when a reverse-play mode is commenced, and the latency values are used throughout the operation. Additionally, the latency values may be based on the frame rate of reverse playback. For example, the presentable frames may be output from the buffers in the reverse direction at any rate of N times a normal playback speed. N may be an integer between 2 and 32, or N may be some other value such as a user selectable value. In one embodiment, the rate of outputting a series of presentable frames from a buffer in the reverse direction is based on an upper limit of a rate of decoding a segment of the stream of video data. The particular rate at which presentable frames are output may affect the latency calculations or predictions for starting and stopping operations in the entertainment device 214.

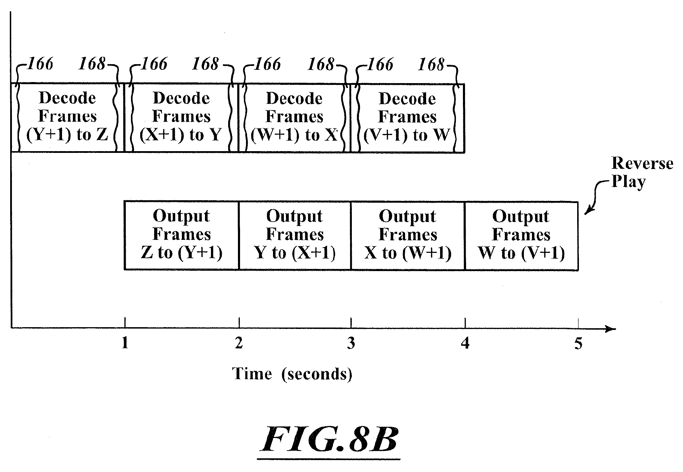

Figure 8B illustrates an example of relationships between decode-and-store operations and retrieve-and-output operations of the data streams of Figure 8A. Figure 8A shows a graph having a horizontal axis of time in seconds. At time 0, a user commences a reverse play mode operation. A first latency 166 and a second latency 168 are calculated. The decode-and-store operation for frames (Y+1) to Z may be adjusted to begin or end based on the first latency 166, the second latency 168, or both. In some cases, the calculations or predictions are made based on previous performances. In other cases, the calculations or predictions are hard coded.

Subsequent decode-and-store operations occur as described with respect to Figure 8A. Figure 8B illustrates that the same latencies 166, 168 are calculated, predicted, and applied for each decode-and-store operation, however, it is recognized that different values may be calculated.

Figure 8B further illustrates the offsetting overlap between the decode-and-store operations and the retrieve-and-output operations. The decode-and-store operations will decode frames in a forward order, and the retrieve-and-output operations will output frames in a reverse order. The retrieve-and-output operations are also illustrated as occurring without delay between the uses of the alternating buffers. That is, the presentable frames are output at a predictable frame rate, and a user will view a smooth playback of the presentable frames in reverse.

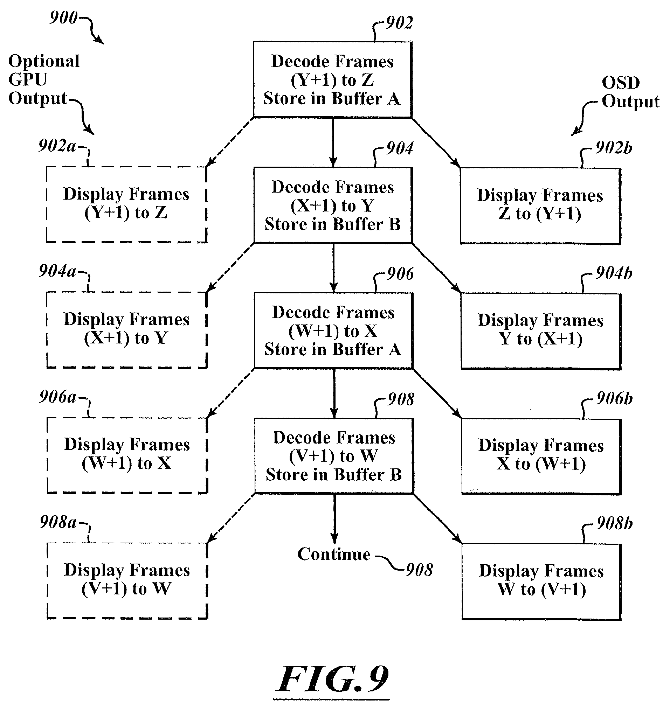

Figure 9 illustrates a conceptual flowchart 900 of the decode-and-store operations performed concurrently with the retrieve-and-output operations. In the flowchart, reference to the streaming data flow of video frames 146 and sequence of presentable frames ordered for reverse playback 164 of Figures 8A-8B are referenced. Additionally, a presentation device 116, GPU 120, and OSD 122 of Figure 5 are also referenced.

At 902, frames (Y+1) to Z are decoded and stored in a first Buffer A. At 904, frames (X+1) to Y are decoded and stored in a second Buffer B. At 902a, concurrent with the decode-and-store operation at 904, the forward playing frames may optionally be output to the presentation device 116 with the GPU 120. At 902b, also concurrent with the decode-and-store operation at 904, the reverse playing frames Z to (Y+1) are output to the presentation device 116 with the OSD 122.

At 906, frames (W+1) to X are decoded and stored in the first Buffer A.

At 904a, concurrent with the decode-and-store operation at 906, the forward playing frames may optionally be output to the presentation device 116 with the GPU 120. At 904b, also concurrent with the decode-and-store operation at 906, the reverse playing frames Y to (X+1) are output to the presentation device 116 with the OSD 122.

At 908, frames (V+1) to W are decoded and stored in the second Buffer B.

At 906a, concurrent with the decode-and-store operation at 908, the forward playing frames may optionally be output to the presentation device 116 with the GPU 120. At 906b, also concurrent with the decode-and-store operation at 908, the reverse playing frames X to (W+1) are output to the presentation device 116 with the OSD 122.

At 910, additional data segments may be decoded and alternately stored in the second and first Buffer B and Buffer A.

At 908a, concurrent, continuing operations at 910, the forward playing frames may optionally be output to the presentation device 116 with the GPU 120. At 908b, also concurrent with continuing operations at 910, the reverse playing frames W to (V+1) are output to the presentation device 116 with the OSD 122.

The reverse playing frames may be superimposed on the forward playing frames, which are optionally output with the GPU 120. Alternatively, the GPU 120 does not output the forward-playing frames. The GPU 120 may even be configured to output the reverse playing frames.

In the foregoing description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with electronic and computing systems including client and server computing systems, as well as networks have not been shown or described in detail to avoid unnecessarily obscuring descriptions of the embodiments.

Unless the context requires otherwise, throughout the specification and claims which follow, the word "comprise" and variations thereof, such as, "comprises" and "comprising" are to be construed in an open, inclusive sense, e.g., "including, but not limited to."

Reference throughout this specification to "one embodiment" or "an embodiment" and variations thereof means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

The various embodiments described above can be combined to provide further embodiments.

Embodiments of the present invention have been described with particular reference to the examples illustrated. However, it will be appreciated that variations and modifications may be made to the examples described within the scope of the present invention.

## Claims

1. A method to play video in reverse, comprising:
decoding a first plurality of bits of a video data stream (146) into a first sequence of presentable frames ordered for forward play from frame (Y+1) to frame Z, wherein Y and Z are integers, and Z is larger than Y;
storing the first sequence of presentable frames in a first buffer (132);
decoding a second plurality of bits of the video data stream (146) into a second sequence of presentable frames ordered for forward play from frame (X+1) to frame Y, wherein X is an integer, and Y is larger than X;
storing the second sequence of presentable frames in a second buffer (134);
retrieving the first sequence of presentable frames from the first buffer (132);
concurrent with decoding the second plurality of bits outputting the first sequence of presentable frames as a reverse playing video stream of frames ordered frame Z to (Y+1);
retrieving the second sequence of presentable frames from the second buffer; and
outputting the second sequence of presentable frames as a reverse playing video stream of frames ordered Y to X +1.

2. A method according to claim 1, further comprising:
decoding a third plurality of bits of a video data stream into a third sequence of presentable frames ordered for forward play from frame (W+1) to frame X, wherein W is an integer, and X is larger than W;
storing the third sequence of presentable frames in the first buffer (132);
decoding a fourth plurality of bits of the video data stream into a fourth sequence of presentable frames ordered for forward play from frame (V+1) to frame W, wherein V is an integer, and W is larger than V;
storing the fourth sequence of presentable frames in the second buffer (134);
retrieving the third sequence of presentable frames from the first buffer (132);
outputting the third sequence of presentable frames as a reverse playing video stream of frames ordered frame X to (W+1);
retrieving the fourth sequence of presentable frames from the second buffer (134); and
outputting the fourth sequence of presentable frames as a reverse playing video stream of frames ordered W to V+1.

3. A method according to claim 2, wherein decoding the third plurality of bits of the video data stream occurs during the outputting the second sequence of presentable frames.

4. A method according to claim 2 or claim 3, further comprising:
synchronizing decoding operations of a certain plurality of bits with outputting operations of a previously decoded plurality of bits to provide an apparent seamless reverse playback of presentable frames.

5. A method according to any of claims 1 to 4, wherein outputting the second sequence of presentable frames is a continuation from the outputting the first sequence of presentable frames, said outputting the second sequence of presentable frames providing an appearance of seamless reverse playback.

6. A method according to any of claims 1 to 4, wherein the video data stream (146) is encoded according to an ITU-T H.264 or ISO/IEG MPEG-4 video protocol.

7. A method according to any of claims 1 to 5, wherein the first and second sequences of presentable frames are down-sampled respectively before storing the first and second sequences of presentable frames.

8. A method according to any of claims 1 to 7, wherein the decoding is performed by a single decoder.

9. A method according to any of claims 1 to 8, wherein the outputting is performed by an on-screen display controller (122), the on-screen display controller being separate and distinct from a graphics controller (120) used to output presentable frames in a forward play.

10. An entertainment device (214), comprising:
an input circuit (117) to receive a stream of video data;
memory (130) arranged as a plurality of buffers (132, 134);
a video decoder module (119);
an on-screen display controller (122);
a processing unit (118), the processing unit arranged to direct the video decoder module (119) to decode a first segment of the stream of video data into a first series of presentable frames ordered for forward play and store the first series of presentable frames in a first buffer (132);
the processing unit (118) arranged to direct the video decoder module (119) to decode a second segment of the stream of video data into a second series of presentable frames ordered for forward play and store the second series of presentable frames in a second buffer (134); and
concurrent with the decoding of the second segment, the processing unit arranged to direct the on-screen display controller (122) to output the first series of presentable frames from the first buffer (132) in a reverse direction.

11. An entertainment device according to claim 10, wherein the processing unit is further configured to:
direct the video decoder module (119) to decode a third segment of the stream of video data into a third series of presentable frames ordered for forward play and store the third series of presentable frames in the first buffer (132);
concurrent with the decoding of the third segment, the processing unit is further arranged to direct the on-screen display controller (122) to output the second series of presentable frames in the reverse direction.

12. An entertainment device according to claim 11, wherein the processing unit is further arranged to:
direct the video decoder module (119) to decode a fourth segment of the stream of video data into a fourth series of presentable frames ordered for forward play and store the fourth series of presentable frames in the second buffer (134);
concurrent with the decoding of the fourth segment, the processing unit is further arranged to direct the on-screen display controller (122) to output the third series of presentable frames in the reverse direction.

13. An entertainment device according to claim 12, wherein the first buffer (132) occupies a first memory area and the second buffer (134) occupies a second memory area and the first and second memory areas are configurable for use in a ping-pong operation, wherein when the first area is being used for decoding, the second area is being used for outputting and vice versa.

14. An entertainment device according to any of claims 10 to 13, wherein storing each of the first and second series of presentable frames includes down-sampling the decoded frames.

15. A computer program containing program instructions which when executed on a computing system cause the computer system to perform a method, the method comprising:
directing a video output module to output a decoded sequence of video frames to a display device (116);
storing a decoded first sequence of presentable frames in a first buffer (132) ordered for forward play;
storing a decoded second sequence of presentable frames in a second buffer (134) ordered for forward play; and
while storing the decoded second sequence of presentable frames, directing an on-screen display module (122) to output the first sequence of presentable frames in reverse order to the display device (116).

## Patentansprüche

1. Verfahren zum Rückwärtsabspielen von Videoinhalten, umfassend:
das Dekodieren einer ersten Vielzahl von Bits eines Videodatenstroms (146) in eine erste Sequenz von präsentierbaren Frames, angeordnet für das Vorwärtsabspielen von Frame (Y+1) bis Frame Z, wobei Y und Z Ganzzahlen sind und Z größer als Y ist;
das Speichern der ersten Sequenz von präsentierbaren Frames in einem ersten Puffer (132);
das Dekodieren einer zweiten Vielzahl von Bits des Videodatenstroms (146) in eine zweite Sequenz von präsentierbaren Frames, angeordnet für das Vorwärtsabspielen von Frame (X+1) bis Frame Y, wobei X eine Ganzzahl und Y größer als X ist;
das Speichern der zweiten Sequenz von präsentierbaren Frames in einem zweiten Puffer (134);
das Abrufen der ersten Sequenz von präsentierbaren Frames aus dem ersten Puffer (132);
gleichzeitig mit dem Dekodieren der zweiten Vielzahl von Bits das Ausgeben der ersten Sequenz von präsentierbaren Frames als ein Videostrom von Frames für das Rückwärtsabspielen, angeordnet von Frame Z bis (Y+1);
das Abrufen der zweiten Sequenz von präsentierbaren Frames aus dem zweiten Puffer und
das Ausgeben der zweiten Sequenz von präsentierbaren Frames als ein Videostrom von Frames für das Rückwärtsabspielen, angeordnet von Y bis X +1.

2. Verfahren nach Anspruch 1, ferner umfassend:
das Dekodieren einer dritten Vielzahl von Bits eines Videodatenstroms in eine dritte Sequenz von präsentierbaren Frames, angeordnet für das Vorwärtsabspielen von Frame (W+1) bis Frame X, wobei W eine Ganzzahl und X größer als W ist;
das Speichern der dritten Sequenz von präsentierbaren Frames im ersten Puffer (132);
das Dekodieren einer vierten Vielzahl von Bits des Videodatenstroms in eine vierte Sequenz von präsentierbaren Frames, angeordnet für das Vorwärtsabspielen von Frame (V+1) bis Frame W, wobei V eine Ganzzahl und W größer als V ist;
das Speichern der vierten Sequenz von präsentierbaren Frames im zweiten Puffer (134);
das Abrufen der dritten Sequenz von präsentierbaren Frames aus dem ersten Puffer (132);
das Ausgeben der dritten Sequenz von präsentierbaren Frames als ein Videostrom von Frames für das Rückwärtsabspielen, angeordnet von Frame X bis (W+1);
das Abrufen der vierten Sequenz von präsentierbaren Frames aus dem zweiten Puffer (134) und
das Ausgeben der vierten Sequenz von präsentierbaren Frames als ein Videostrom von Frames für das Rückwärtsabspielen, angeordnet von W bis V+1.

3. Verfahren nach Anspruch 2, wobei das Dekodieren der dritten Vielzahl von Bits des Videodatenstroms beim Ausgeben der zweiten Sequenz von präsentierbaren Frames erfolgt.

4. Verfahren nach Anspruch 2 oder Anspruch 3, ferner umfassend: das Synchronisieren von Dekodierungsvorgängen einer bestimmten Vielzahl von Bits mit Ausgabevorgängen einer zuvor dekodierten Vielzahl von Bits, um ein als nahtlos erscheinendes Rückwärtsabspielen von präsentierbaren Frames bereitzustellen.

5. Verfahren nach einem der Ansprüche 1 bis 4, wobei das Ausgeben der zweiten Sequenz von präsentierbaren Frames eine Fortsetzung des Ausgebens der ersten Sequenz von präsentierbaren Frames ist, wobei das Ausgeben der zweiten Sequenz von präsentierbaren Frames ein Erscheinungsbild von nahtlosem Rückwärtsabspielen bereitstellt.

6. Verfahren nach einem der Ansprüche 1 bis 4, wobei der Videodatenstrom (146) gemäß einem ITU-T H.264- oder ISO/IEG MPEG-4-Videoprotokoll kodiert ist.

7. Verfahren nach einem der Ansprüche 1 bis 5, wobei die ersten und zweiten Sequenzen von präsentierbaren Frames jeweils heruntergetaktet werden, bevor die ersten und zweiten Sequenzen von präsentierbaren Frames gespeichert werden.

8. Verfahren nach einem der Ansprüche 1 bis 7, wobei das Dekodieren von einem einzigen Decoder durchgeführt wird.

9. Verfahren nach einem der Ansprüche 1 bis 8, wobei das Ausgeben von einer On-Screen-Display-Steuerung (122) durchgeführt wird, wobei die On-Screen-Display-Steuerung getrennt und verschieden von einer Grafiksteuerung (120) ist, die für das Ausgeben von präsentierbaren Frames beim Vorwärtsabspielen verwendet wird.

10. Unterhaltungsgerät (214), umfassend:
einen Eingangskreis (117) für den Empfang eines Videodatenstroms;
Speicher (130), angeordnet als eine Vielzahl von Puffern (132, 134);
ein Videodecodermodul (119);
eine On-Screen-Display-Steuerung (122);
eine Verarbeitungseinheit (118), wobei die Verarbeitungseinheit angeordnet ist zum Anweisen des Videodecodermoduls (119) zum Dekodieren eines ersten Segments des Videodatenstroms in eine erste Reihe von präsentierbaren Frames, angeordnet für das Vorwärtsabspielen, und zum Speichern der ersten Reihe von präsentierbaren Frames in einem ersten Puffer (132);
wobei die Verarbeitungseinheit (118) angeordnet ist zum Anweisen des Videodecodermoduls (119) zum Dekodieren eines zweiten Segments des Videodatenstroms in eine zweite Reihe von präsentierbaren Frames, angeordnet für das Vorwärtsabspielen, und zum Speichern der zweiten Reihe von präsentierbaren Frames in einem zweiten Puffer (134); und
wobei gleichzeitig mit dem Dekodieren des zweiten Segments die Verarbeitungseinheit angeordnet ist zum Anweisen der On-Screen-Display-Steuerung (122) zum Ausgeben der ersten Reihe von präsentierbaren Frames aus dem ersten Puffer (132) in einer Rückwärtsrichtung.

11. Unterhaltungsgerät nach Anspruch 10, wobei die Verarbeitungseinheit ferner angeordnet ist:
zum Anweisen des Videodecodermoduls (119) zum Dekodieren eines dritten Segments des Videodatenstroms in eine dritte Reihe von präsentierbaren Frames, angeordnet für das Vorwärtsabspielen, und zum Speichern der dritten Reihe von präsentierbaren Frames im ersten Puffer (132);
wobei gleichzeitig mit dem Dekodieren des dritten Segments die Verarbeitungseinheit ferner angeordnet ist zum Anweisen der On-Screen-Display-Steuerung (122) zum Ausgeben der zweiten Reihe von präsentierbaren Frames in der Rückwärtsrichtung.

12. Unterhaltungsgerät nach Anspruch 11, wobei die Verarbeitungseinheit ferner angeordnet ist:
zum Anweisen des Videodecodermoduls (119) zum Dekodieren eines vierten Segments des Videodatenstroms in eine vierte Reihe von präsentierbaren Frames, angeordnet für das Vorwärtsabspielen, und zum Speichern der vierten Reihe von präsentierbaren Frames im zweiten Puffer (134);
wobei gleichzeitig mit dem Dekodieren des vierten Segments die Verarbeitungseinheit ferner angeordnet ist zum Anweisen der On-Screen-Display-Steuerung (122) zum Ausgeben der dritten Reihe von präsentierbaren Frames in der Rückwärtsrichtung.

13. Unterhaltungsgerät nach Anspruch 12, wobei der erste Puffer (132) einen ersten Speicherbereich belegt und der zweite Puffer (134) einen zweiten Speicherbereich belegt und die ersten und zweiten Speicherbereiche für die Verwendung in einem Ping-Pong-Betrieb anordenbar sind, wobei bei Verwendung des ersten Bereichs für das Dekodieren der zweite Bereich für das Ausgeben verwendet wird und umgekehrt.

14. Unterhaltungsgerät nach einem der Ansprüche 10 bis 13, wobei das Speichern jeweils der ersten und zweiten Reihen von präsentierbaren Frames das Heruntertakten der dekodierten Frames umfasst.

15. Computerprogramm, das Programmanweisungen enthält, die, wenn sie auf einem Rechensystem ausgeführt werden, bewirken, dass das Rechensystem ein Verfahren ausführt, wobei das Verfahren Folgendes umfasst:
Anweisen eines Videoausgabemoduls zum Ausgeben einer dekodierten Sequenz von Video-Frames an ein Anzeigegerät (116);
Speichern einer dekodierten ersten Sequenz von präsentierbaren Frames in einem ersten Puffer (132), angeordnet für das Vorwärtsabspielen;
Speichern einer dekodierten zweiten Sequenz von präsentierbaren Frames in einem zweiten Puffer (134), angeordnet für das Vorwärtsabspielen; und
beim Speichern der dekodierten zweiten Sequenz von präsentierbaren Frames, Anweisen eines On-Screen-Display-Moduls (122) zum Ausgeben der ersten Sequenz von präsentierbaren Frames in umgekehrter Reihenfolge an das Anzeigegerät (116).

## Revendications

1. Procédé de lecture vidéo en sens inverse, consistant à :
décoder une première pluralité de bits d'un flux de données vidéo (146) en une première séquence de trames présentables ordonnées pour une lecture en marche avant depuis une trame (Y+1) jusqu'à une trame Z, dans lequel Y et Z sont des nombres entiers, et Z est plus grand que Y ;
stocker la première séquence de trames présentables dans une première mémoire tampon (132) ;
décoder une deuxième pluralité de bits du flux de données vidéo (146) en une deuxième séquence de trames présentables ordonnées pour une lecture en marche avant depuis une trame (X+1) jusqu'à une trame Y, dans lequel X est un nombre entier, et Y est plus grand que X ;
stocker la deuxième séquence de trames présentables dans une deuxième mémoire tampon (134) ;
récupérer la première séquence de trames présentables depuis la première mémoire tampon (132) ;
simultanément au décodage de la deuxième pluralité de bits, émettre la première séquence de trames présentables sous la forme d'un flux vidéo en lecture inversée de trames ordonnées depuis une trame Z jusqu'à (Y+1) ;
récupérer la deuxième séquence de trames présentables depuis la deuxième mémoire tampon ; et
émettre la deuxième séquence de trames présentables sous la forme d'un flux vidéo en lecture inversée de trames ordonnées depuis Y jusqu'à (X+1).

2. Procédé selon la revendication 1, consistant en outre à :
décoder une troisième pluralité de bits d'un flux de données vidéo en une troisième séquence de trames présentables ordonnées pour une lecture en marche avant depuis une trame (W+1) jusqu'à une trame X, dans lequel W est un nombre entier et X est plus grand que W ;
stocker la troisième séquence de trames présentables dans la première mémoire tampon (132) ;
décoder une quatrième pluralité de bits du flux de données vidéo en une quatrième séquence de trames présentables ordonnées pour une lecture en marche avant depuis une trame (V+1) jusqu'à une trame W, dans lequel V est un nombre entier et W est plus grand que V ;
stocker la quatrième séquence de trames présentables dans la deuxième mémoire tampon (134) ;
récupérer la troisième séquence de trames présentables depuis la première mémoire tampon (132) ;
émettre la troisième séquence de trames présentables sous la forme d'un flux vidéo en lecture inversée de trames ordonnées depuis la trame X jusqu'à (W+1) ;
récupérer la quatrième séquence de trames présentables depuis la deuxième mémoire tampon (134) ; et
émettre la quatrième séquence de trames présentables sous la forme d'un flux vidéo en lecture inversée de trames ordonnées depuis W jusqu'à (V+1).

3. Procédé selon la revendication 2, dans lequel le décodage de la troisième pluralité de bits du flux de données vidéo se produit lors de l'émission de la deuxième séquence de trames présentables.

4. Procédé selon la revendication 2 ou 3, consistant en outre à : synchroniser les opérations de décodage d'une pluralité donnée de bits avec les opérations d'émission d'une pluralité de bits préalablement décodés pour procurer une lecture inversée continue apparente de trames présentables.

5. Procédé selon l'une quelconque des revendications 1 à 4, dans lequel l'émission de la deuxième séquence de trames présentables est une continuation depuis l'émission de la première séquence de trames présentables, ladite émission de la deuxième séquence de trames présentables apportant une apparence de lecture inversée continue.

6. Procédé selon l'une quelconque des revendications 1 à 4, dans lequel le flux de données vidéo (146) est encodé selon un protocole vidéo ITU-T H.264 ou ISO/IEC MPEG-4.

7. Procédé selon l'une quelconque des revendications 1 à 5, dans lequel la première et la deuxième séquences de trames présentables sont sous-échantillonnées respectivement avant le stockage de la première et la deuxième séquences de trames présentables.

8. Procédé selon l'une quelconque des revendications 1 à 7, dans lequel le décodage est exécuté par un décodeur unique.

9. Procédé selon l'une quelconque des revendications 1 à 8, dans lequel l'émission est exécutée par une unité de commande d'affichage à l'écran (122), l'unité de commande d'affichage à l'écran étant séparée et distincte d'une unité de commande graphique (120) utilisée pour émettre des trames présentables dans une lecture en marche avant.

10. Dispositif de divertissement (214), comprenant :
un circuit d'entrée (117) pour recevoir un flux de données vidéo ;
une mémoire (130) agencée sous la forme d'une pluralité de mémoires tampon (132, 134) ;
un module décodeur vidéo (119) ;
une unité de commande d'affichage à l'écran (122) ;
une unité de traitement (118), l'unité de traitement agencée pour commander au module décodeur vidéo (119) de décoder un premier segment du flux de données vidéo en une première série de trames présentables ordonnées pour une lecture en marche avant et de stocker la première série de trames présentables dans une première mémoire tampon (132) ;
l'unité de traitement (118) agencée pour commander au module décodeur vidéo (119) de décoder un premier segment du flux de données vidéo en une deuxième série de trames présentables ordonnées pour une lecture en marche avant et de stocker la deuxième série de trames présentables dans une deuxième mémoire tampon (134) ; et
simultanément au décodage du deuxième segment, l'unité de traitement est agencée pour commander à l'unité de commande d'affichage à l'écran (122) d'émettre la première série de trames présentables depuis la première mémoire tampon (132) dans un sens inversé.

11. Dispositif de divertissement selon la revendication 10, dans lequel l'unité de traitement est en outre configurée pour :
commander au module décodeur vidéo (119) de décoder un troisième segment du flux de données vidéo en une troisième série de trames présentables ordonnées pour une lecture en marche avant et de stocker la troisième série de trames présentables dans la première mémoire tampon (132) ; et
simultanément au décodage du troisième segment, l'unité de traitement est en outre agencée pour commander à l'unité de commande d'affichage à l'écran (122) d'émettre la deuxième série de trames présentables dans le sens inversé.

12. Dispositif de divertissement selon la revendication 11, dans lequel l'unité de traitement est en outre agencée pour :
commander au module décodeur vidéo (119) de décoder un quatrième segment du flux de données vidéo en une quatrième série de trames présentables ordonnées pour une lecture en marche avant et de stocker la quatrième série de trames présentables dans la deuxième mémoire tampon (134) ; et
simultanément au décodage du quatrième segment, l'unité de traitement est en outre agencée pour commander à l'unité de commande d'affichage à l'écran (122) d'émettre la troisième série de trames présentables dans le sens inversé.

13. Dispositif de divertissement selon la revendication 12, dans lequel la première mémoire tampon (132) occupe un premier espace de mémoire et la deuxième mémoire tampon (134) occupe un deuxième espace de mémoire et les premier et deuxième espaces de mémoire peuvent être configurés pour l'application d'un mode ping-pong, dans laquelle lorsque le premier espace est en cours d'utilisation pour décodage, le deuxième espace est alors utilisé pour l'émission et vice versa.

14. Dispositif de divertissement selon l'une quelconque des revendications 10 à 13, dans lequel le stockage de chacune des première et deuxième séries de trames présentables inclut le sous-échantillonnage des trames décodées.

15. Programme informatique contenant des instructions de programme qui lorsqu'elles sont exécutées sur un système informatique amènent le système informatique à exécuter un procédé, le procédé consistant à :
commander à un module d'émission vidéo d'émettre une séquence décodée de trames vidéo à un dispositif d'affichage (116) ;
stocker une première séquence décodée de trames présentables dans une première mémoire tampon (132) ordonnées pour une lecture en marche avant ;
stocker une deuxième séquence décodée de trames présentables dans une deuxième mémoire tampon (134) ordonnées pour une lecture en marche avant ; et
pendant le stockage de la deuxième séquence décodée de trames présentables, commander au module d'affichage à l'écran (122) d'émettre la première séquence de trames présentables dans un ordre inversé au dispositif d'affichage (116).
